(19) Europäisches Patentamt
European Patent Office
Office européen des brevets

(11) **EP 2 892 016 A1**

(12) **EUROPEAN PATENT APPLICATION**
published in accordance with Art. 153(4) EPC

(43) Date of publication:
**08.07.2015 Bulletin 2015/28**

(51) Int Cl.:
**G06Q 30/02** (2012.01)  **G06F 17/00** (2006.01)

(21) Application number: **13832070.0**

(22) Date of filing: **29.08.2013**

(86) International application number:
**PCT/KR2013/007771**

(87) International publication number:
**WO 2014/035158 (06.03.2014 Gazette 2014/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **31.08.2012 KR 20120096778**

(71) Applicant: **SK Telecom Co., Ltd**
**Seoul 100-999 (KR)**

(72) Inventors:
• **YANG, Seung-ji**
  **Bundang-gu**
  **Seongnam-si**
  **Gyeonggi-do 463-894 (KR)**
• **KIM, Ki-mun**
  **Bundang-gu**
  **Seongnam-si**
  **Gyeonggi-do 463-772 (KR)**

(74) Representative: **Isarpatent**
**Patentanwälte Behnisch Barth Charles**
**Hassa Peckmann & Partner mbB**
**Friedrichstrasse 31**
**80801 München (DE)**

(54) **METHOD AND DEVICE FOR CHARGING FOR CUSTOMIZED SERVICE**

(57)     An apparatus for charging for a user customized service includes an image processor configured to receive image data of a user recorded by an image capturer and to extract specific data from the image data, a user identifier configured to identify user identification data of the user based on the specific data, a service extractor configured to extract the user customized service to be offered to the user, based on the user identification data of the user, at least one service provider configured to receive information on the user customized service from a service storage unit and to provide the information to the user, and a service charger configured to calculate a service fee for the user customized service of a particular service provider by an exposure ratio of the user customized service exposed to the user.

*FIG. 1*

EP 2 892 016 A1

**Description**

[Technical Field]

The present disclosure relates to a method and an apparatus for charging for a user customized service. More particularly, the present disclosure relates to a method and an apparatus for charging for a user customized service, in which the user customized service is provided to a user by identifying user identification information based on image data of the user recorded by an image capturer, and a service fee is calculated by an exposure ratio of the service exposed to the user, based on the image data of the user.

[Background]

The statements in this section merely provide background information related to the present disclosure and do not constitute prior art.

In recent years, conventional out-of-home (OOH) media are turned faster into a digital OOH (DOOH) media, and particularly in the area of advertisement media exhibits the evolution toward DOOH advertisement system (hereinafter, a "digital signage"). The digital signage is currently installed in various public places such as subway station, shopping mall, and ground transportation stop depending on its purpose not only in a form of large-sized screen but also in a Kiosk type, gradually diversifying its place of application. Besides, the digital signage is being advanced in a form of providing a bidirectional service such that various information and content items can be exchanged with the user through an IT-based display, beyond the conventional unidirectional information provision. This provides the users with a map service, user customized and locally-based advertisement for product purchase, coupon-linked service, and the like by user selection such as a touch of a display.

On the other hand, the digital signage, which provides the bidirectional advertisement service, currently provides a customized service based on a method in which a user actively participates through a touch screen or the like; however, there are few ways to quantify and reflect the effect of such services in a monetary charge, and hence there is a need to provide a method for measuring the effect of an advertisement in a quantitative manner.

[Disclosure]

[Technical Problem]

Therefore, the present disclosure has been made in an effort to effectively resolving at least a part of the above-mentioned problems. In some embodiments of the present disclosure, a user customized service is provided to a user by identifying user identification information based on image data of the user recorded by an image capturer, and a service fee is calculated by an exposure ratio of the user customized service exposed to the user, based on the image data of the user.

[Summary]

According to some embodiments, an apparatus for charging for a user customized service includes an image processor configured to receive image data of a user recorded by an image capturer and to extract specific data from the image pixel data, a user identifier configured to identify user identification data of the user based on the specific data, a service extractor configured to extract the user customized service to be offered to the user, based on the user identification data of the user, at least one service provider configured to receive information on the user customized service from a service storage unit and to provide the information to the user, and a service charger configured to calculate a service fee for the user customized service of a particular service provider among the at least one service provider by an exposure ratio of the user customized service exposed to the user.

The apparatus for charging for the user customized service may further include a service time calculator configured to calculate a service exposure time during which the user customized service is exposed to the user, based on the image data of the user, wherein the exposure ratio may be a ratio of the service exposure time to a total service time of the user customized service. Here, the service fee may be proportional to a value of at least one weighting factor which is set for each of the user identification data, multiplied by the exposure ratio.

The at least one weighting factor may include any one weight selected from the group consisting of a weight on a gender of the user, a weight on an age of the user, a weight on a race of the user, and any combinations thereof.

The service fee may include a first service fee and a second service fee, where the first service fee is a fixed basic service fee, and the second service fee is proportional to the exposure ratio. The service fee may include a first service fee and a second service fee, where the first service fee is a fixed basic service fee, and the second service fee is proportional to an average of values of respective service weighting factors, each calculated for each user customized service of the particular service provider, multiplied by the exposure ratio.

According to some embodiments, a method of charging for a user customized service includes receiving captured image data of a user recorded by an image capturer and extracting specific data from the captured image data, identifying user identification data of the user based on the specific data, selecting the user customized service to be offered to the user, based on the user identification data of the user, receive information on the user customized service from a service storage unit and providing the information to the user, calculating a service exposure time during which the user customized service is exposed to the user, based on the image data of the user, and calculating a service fee for the user customized service of a particular service provider by an exposure ratio of the user customized service exposed to the user, based on the image data of the user.

The exposure ratio may be a ratio of the exposure time to a total service time of the user customized service, and the service fee may be proportional to a value of at least one weighting factor which is set for each of the user identification data, multiplied by the exposure time.

The at least one weighting factor may include any one weight selected from the group consisting of a weight on a gender of the user, a weight on an age of the user, a weight on a race of the user, and any combinations thereof.

[Advantageous Effects]

According to some embodiments of the present disclosure as described above, a service such as an individually customized advertisement is provided to a user by identifying user identification information based on image data of the user recorded by an image capturer, and a service fee is calculated by an exposure ratio of the service exposed to the user, based on the image data of the user.

In addition, the service fee to be charged to a service provider is reasonably determined by calculating the service fee (e.g., advertisement fee) with respect to the service exposure effect, after setting service targets such as age and gender as the user identification information, based on each of the set user identification information.

[Description of Drawings]

FIG. 1 is a block diagram of an apparatus for charging for a user customized service according to some embodiments.
FIG. 2 is a diagram of a table of target genders and target ages for advertisements of an arbitrary particular advertiser.
FIG. 3 is a schematic diagram of a system for providing a user customized service, which employs an apparatus for charging for a user customized service according to some embodiments.
FIG. 4 is a diagram of a step of extracting specific data corresponding to a face area of a user from image data of the user according to some embodiments.
FIG. 5 is a diagram of user consumption patterns by gender, age, and race for a plurality of users stored in a customer statistics unit according to some embodiments.
FIG. 6 is a flowchart of a procedural process for a method of charging for a user customized service according to some embodiments.

[Detailed Description]

Hereinafter, at least one embodiment of the present disclosure will be described in detail with reference to the accompanying drawings. In the following description of the at least one embodiment, detailed descriptions of known functions and configurations incorporated herein will be omitted for the purpose of clarity and for brevity.

An apparatus for charging for a user customized service is, for example, an automated terminal installed in a public place such as airport, hotel, and department store, which can be easily accessed by the public. Mostly, the automated terminal receives selection information from a user through a touch screen, and provides a user customized service to the user based on the received selection information. An apparatus for charging for a user customized service, according to some embodiments of the present disclosure further includes an image capturer, such that the device automatically identifies user information even without an active interaction of the user, such as a touch on the touch screen, and provides a user customized service based on the identified user information.

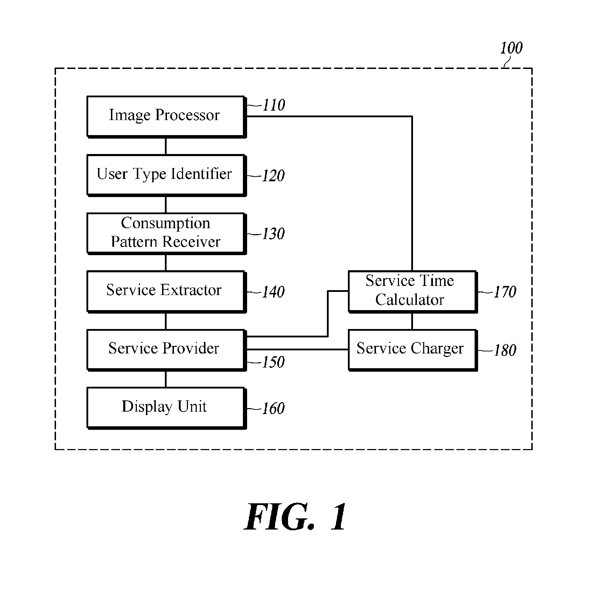

FIG. 1 is a block diagram of an apparatus 100 for charging for a user customized service charging according to some embodiments.

The charging apparatus 100 according to some embodiments includes an image processor 110, a user type identifier 120, a consumption pattern receiver 130, a service extractor 140, a service provider 150, a display unit 160, a service time calculator 170, and a service charger 180. Although it is described that, in some embodiments, the charging apparatus 100 includes the above-mentioned elements, those skilled in the art will appreciate that various modifications, additions and substitutions are possible, without departing from the essential characteristics of the disclosure.

The image processor 110 receives image data of a user recorded by an image capturer, and extracts specific data for providing a user customized service from the image data. In other words, the image processor 110 receives the image data of the user positioned within a predetermined distance from the image capturer having a function of recording an image or a video, such as a digital camera, and extracts the specific data to be used as a determination reference for providing the user customized service, based on the image data. In some embodiments, the specific data to be used as the determination reference for providing the user customized service to the user is a face area of the user in the image data of the user, and by extracting the face area of the user, the user identification information of the user can be identified.

The image processor 110 divides the received image data into each pixel, and extracts an area corresponding to the face area of the user from the divided pixels. When the whole or a part of the user is recorded in the image data of the user, the image processor 110 classifies data included in the image data based on a preset classification range, and divides it into each pixel, to extract the specific data including the face area of the user.

Upon extracting the data of the face area of the user, the image processor 110 further extracts information on the eyes of the user from pixels of an area from the forehead to the neck excluding hairs, and when both eyes of the user are not located in a horizontal position, makes a face alignment in a manner that both eyes of the user are located at the horizontal position by adjusting the positions of the eyes. Upon determining that the eyes of the user at located at the horizontal position, the image processor 110 determines that the face of the user is aligned to face the front.

The user type identifier 120 identifies the user identification of the user based on the extracted and aligned face specific data. In other words, upon determining that the eyes of the user aligned with the horizontal position so that the face of the user faces the front, the user type identifier 120 identifies the user identification information such as gender, age, and race of the user by using the specific data and pre-stored identification information.

The user type identifier 120 performs a pattern matching of pieces of identification information such as gender, age, and race of a plurality of users stored in the user type identifier 120 with the specific data of the user by using a pattern matching algorithm, and identifies the gender, the age, and the race of the user based on a result of the pattern matching. In other words, specific data items of a plurality of users and the pieces of identification information on gender, age, and race of a plurality of users actually acquired are stored in a database of the user type identifier 120, and when the specific data for an image of a new user is received, the user type identifier 120 performs the pattern matching of the pre-stored identification information with the specific data of the new user, and extracts identification information of a user with the highest probability.

Although it is described that the user identification information identified by the user type identifier 120 according to some embodiments includes information on the gender, the age, and the race, the present disclosure is not limited to this scheme, but a plurality of pieces of information for identifying the user can be included as appropriate.

The consumption pattern receiver 130 interlocks with a customer statistics unit, and receives consumption pattern information for a plurality of users living and working in an area where the user is recorded (e.g., Seoul) from the customer statistics unit. The consumption pattern information for each gender, age, and race of a plurality of users living and working in an area where the charging apparatus 100 for a user customized service is located is stored in the customer statistics unit. Such consumption pattern information is provided by credit card or point card service providers. The consumption pattern receiver 130 receives the consumption pattern information, and uses it another material for determining a user customized service. Further, with consumption pattern information for each gender, age, and race of a plurality of users received from the consumption pattern receiver 130, the charging apparatus 100 gains the consumption pattern of different users having the same or similar user identification information as that of the user who is provided with the user customized service, and thereby it can provide more accurate user customized service (e.g., advertisement service).

Although the consumption pattern information of a plurality of users received by the consumption pattern receiver 130 includes the amount of consumption, which indicates a consumption level of a plurality of users, and product of personal preference, which indicates a product purchased or viewed by a majority of the plurality of users, the present disclosure is not limited to this scheme, but the consumption pattern information may include various pieces of information from which the consumption pattern of the plurality of users can be acquired.

The service extractor 140 extracts a user customized service to be provided to a user, based on the user identification information and the consumption pattern information corresponding thereto. In other words, the service extractor 140 performs a matching of the consumption pattern information for each gender, age, and race of a plurality of users living and working in an area where the charging apparatus 100 for a user customized service charging is located, by using the user identification information including the gender, the age, and the race of the user identified from the specific data, and extracts a set of services related to the consumption pattern information of users having the same or similar user identification information as that of the user who is provided with the user customized service.

The service extractor 140 determines a correlation between the consumption pattern information of the users having the same user identification information as that of the user who is provided with the user customized service and the set of services related to the consumption pattern information, and extracts a service having the maximum correlation value as the user customized service for the user. The number of services having the maximum correlation value may be one or more.

The user identification information for matching with the consumption pattern information can be acquired from Equation 1.

$$I = (G, A, \cdots)$$
$$G = \{g_1, g_2, \cdots\}$$
$$A = \{a_1, a_2, \cdots\}$$
$$P_i = \{G_P, A_P, \cdots\}$$
$$\text{where } G_P \in G, A_P \in A,$$

Equation 1

In Equation 1, I is the user identification information including various identification criteria such as gender and age, and is expressed as I=(G, A,...). G, representing the gender of the user, is expressed as a set $G=\{g_2, g_2,...\}$ of one or more values for making a gender distinction. A, the age of the user, is expressed as a set $A=\{a_1, a_2,...\}$ of one or more values for classifying age. P is the user photographed by the image capturer, and the user P's identification information is expressed as $P_I=\{G_p, A_p,...\}$. In other words, the identification information of a user P can be obtained through gender value sets and age value sets of the users recorded by the image capturer.

In addition, the consumption pattern for each gender, age, and race of a plurality of users living and working in an area where the charging apparatus 100 is located can be expressed by Equation 2.

$$T_I^L = \{B, C, \cdots\}$$

Equation 2

In Equation 2, $T_I^L$ is consumption pattern information of users having user identification information I including the gender and the age among people living in place L, and B and C are specific values of the consumption pattern information. In some embodiments, B and C are values indicating the amount of consumption and the product of personal preference, but the specific values of the consumption pattern information are not limited to these values. The specific values B and C of the consumption pattern information may be data obtained by statistically analyzing data from a plurality of users, which are generally average values thereof.

The correlation between the consumption pattern information of the users having the same or similar user identification as that of the user who is provided with the user customized service and the set of services related to the consumption pattern information is determined, and the service having the maximum correlation value is extracted by Equation 3.

$$S_{\text{target}} = \arg\max_{S \in \mathbf{S}} D\left(T_{P_i}^L, \mathbf{S}\right)$$

Equation 3

In Equation 3, $S_{\text{target}}$ is the service having the maximum correlation value. In some embodiments, $S_{\text{target}}$ is extracted by obtaining $D(T_{P_I}^L, S)$, i.e., the maximum correlation value between the consumption pattern information of users having identification information $P_I$ of a user P recorded by the image capturer among a plurality of users living in a place L where there is the charging apparatus 100 and a service set S indexed based on the identification information. The service set S according to some embodiments basically includes an advertisement, but the present disclosure is not limited to this scheme, i.e., the service set S may include a plurality of services to be provided to the user.

The service provider 150 receives information on the extracted user customized service from a service storage device, and provides the service to the user through the display unit 160. When the service to be provided to the user is an advertisement, the service storage device receives an advertisement for a product under contract with a service provider (e.g., advertiser) from a service agency that provides the advertisement service, and when the advertisement for the product matches the user customized service, provides the advertisement to the user through the display unit 160.

The service time calculator 170 calculates a service exposure time during which the user customized service provided to the user is exposed to the user, based on the image data of the user recorded by the image capturer. The service time calculator 170 calculates a time when the user who was receiving the user customized service through the display unit 160 no longer receives the user customized service. The service exposure time is calculated as a time between when the user customized service and when it is detected that the user no longer exists from the image data received from the image capturer or it is detected that the user's attention leaves the user customized service.

The service exposure time is accumulated and stored for each of user identification information with respect to all users who are provided with the user customized service. For example, a first user who is provided with a first product advertisement is an Asian female in her 20's and the service providing time is 20 seconds, and a second user who is provided with the first product advertisement is an Asian female in her 30's and the service providing time is 25 seconds, the service exposure time is accumulated for the advertisement in a manner that 20 seconds for 20's and 25 seconds for 30's are accumulated for the age identification information, 20 + 25 = 45 seconds is accumulated for the gender identification information, and 45 seconds is accumulated for the Asian (race) identification information.

The service exposure time is accumulated in this manner for each elements of the user identification information. For example, with respect to the user identification by gender, service exposure times are respectively accumulated for male and female.

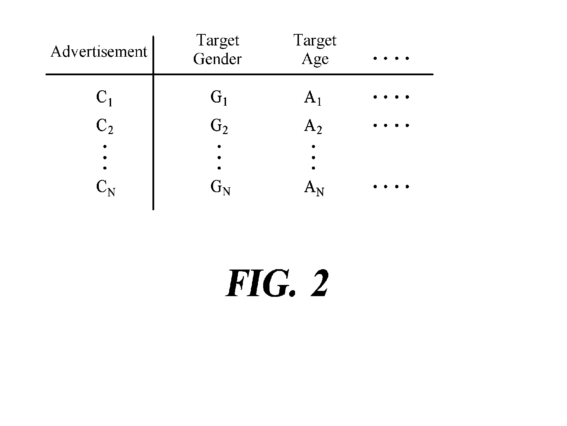

FIG. 2 is a diagram of a table of target genders and target ages for advertisements of an arbitrary particular advertiser.

As shown in FIG. 2, when it is planned to store N advertisements $C_1$ to $C_N$ for an advertiser and display the advertisements to users through the charging apparatus 100 for a user customized service charging, pieces of information on target gender and target age to display the advertisements may be stored for each advertisement $C_n$. Such targeting information may be specified by the advertiser and stored together with the advertisements. The present disclosure does not limit a method for obtaining such targeting information to a specific method.

When the total advertisement time for which an arbitrary advertisement $C_n$ is displayed is defined as $T_n$, and a time for which the advertisement $C_n$ is displayed for target gender $G_n$ is defined as $t_n^G$, a hit rate $h_n^G$ indicating that the advertisement $C_n$ successfully targeted the gender $G_n$ can be expressed as Equation 4.

$$h_n^G = \frac{t_n^G}{T_n}$$

Equation 4

When a time during which the advertisement $C_n$ is displayed to target gender An is defined as $t_n^A$, a hit rate $h_n^A$ indicating that the advertisement $C_n$ is successfully targeted the gender An can be expressed as Equation 5.

$$h_n^A = \frac{t_n^A}{T_n}$$

Equation 5

Hit rates for the targeting information other than the gender and the age can be obtained in the similar manner.

The service charger 180 calculates a service fee (e.g., advertisement fee) according to an exposure ratio of the service exposed to the user by using the service exposure time calculated based on the image data of the user by the service time calculator 170 with respect to a user customized service (i.e., advertisement in this example) of a particular advertiser.

The exposure ratio according to the user identification information (i.e., gender and age) can be obtained by Equations 4 and 5, and a total exposure ratio (hit rate) can be calculated by Equation 6, according to the exposure ratios calculated in the above manner.

$$H_{avg} = \frac{1}{N} \sum_{n=1}^{N} \left[ W_n \cdot \left( w_n^G \cdot h_n^G + w_n^A \cdot h_n^A + \cdots \right) \right]$$

Equation 6

In Equation 6, $w^G + w^A + \ldots = 1$ and $W_1 + \ldots W_N = 1$.

In Equation 6, $w^G$ is a weight by gender for the advertisement $C_n$, $w^A$ is a weight by age for the advertisement $C_n$, and a sum of the weights of the user identification information including the gender, the age, and the race for the

advertisement $C_n$ is 1. $W_n$ is a weight for the advertisement $C_n$ in the whole advertisement, and a sum of the weights for the advertisements is 1.

As indicated in Equation 6, the service charger 180 calculates a target advertisement hit rate $H_{avg}$ by using a value proportional to a value ($w^G h_n^G + w^A h_n^A + ...$) of at least one weighting factor ($w^G$, $w^A$, and the like) set for each of the user identification information, multiplied by the corresponding exposure ratio ($h_n^G$, $h_n^A$, and the like). As indicated in Equation 6, the at least one weighting factor that is set for each of the user identification information may include any one weight selected from the group consisting of a weight on the gender of the user, a weight on the age of the user, a weight on the race of the user, and any combinations thereof.

When the target advertisement hit rate $H_{avg}$ for a particular advertiser is determined as Equation 6, an advertisement fee $V_t$ is calculated by additionally calculating an effect of the target advertisement by Equation 7.

$$V_t = V(1 + \alpha H_{avg})$$

Equation 7

In Equation 7, V is a basic service fee (e.g., basic advertisement fee) of the whole advertisement according to a display time of the advertisement, $\alpha$ is a weight indicating a portion of the target advertisement hit rate in the calculation of the advertisement fee. In Equation 7, the total advertisement fee $V_t$ is calculated by reflecting the target advertisement hit rate $H_{avg}$ calculated by Equation 6 on the advertisement fee. That is, the advertisement fee of a particular advertiser is calculated by summing the fixed basic advertisement fee and a value proportional to an average of values of respective service weighting factors, each calculated for each user customized advertisement service $C_1 \sim C_n$ of the particular advertiser, multiplied by the exposure ratio.

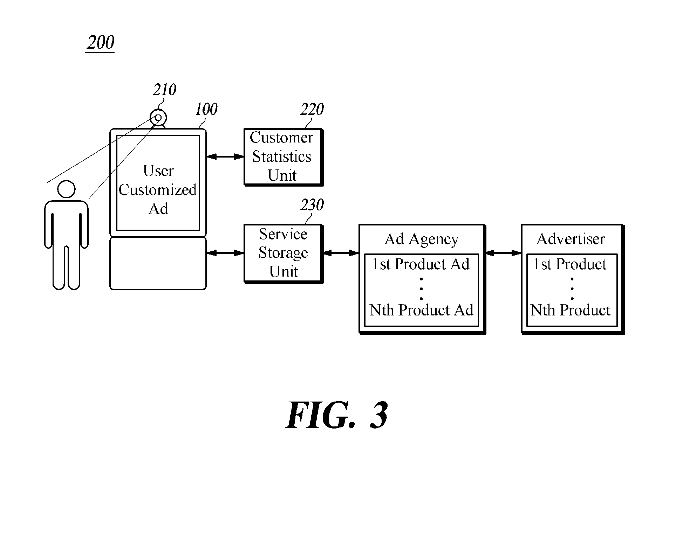

FIG. 3 is a schematic diagram of a system 200 for providing a user customized service, which employs the charging apparatus 100 for a user customized service according to some embodiments.

The system 200 for providing a user customized service employing the device 100 for charging for a user customized service according to some embodiments includes the user customized service charging apparatus 100, an image capturer 210, a customer statistics unit 220 and a service storage unit 230.

The user customized service charging apparatus 100 includes the image capturer 210 for recording an image of a user, identifies the user identification information including gender, age, and race, based on the image data of the user collected through the image capturer 210, receives consumption pattern information of a plurality of users living and working in an area where the user is located, and provides a user customized service by matching user identification information of the user and the consumption pattern information of the plurality of users.

The device 100 classifies the image data of the user received from the image capturer 210 by pixel unit, and extracts an area corresponding to the face area of the user from the divided pixels. Thereafter, the charging apparatus 100 further extracts information on eyes of the user, and when both eyes of the user are not located at a horizontal position, adjusts the positions of the eyes such that both eyes of the user are located at the horizontal position. Upon determining that the eyes of the user at located at the horizontal position, the charging apparatus 100 determines that the face of the user is spatially transformed to face the front.

The charging apparatus 100 performs a pattern matching of the image data of a plurality of users stored in the apparatus 100 to identification information on gender, age, and race of a plurality of users actually acquired, based on the data of the extracted and spatially transformed face of the user, and extracts identification information of a user with the highest probability.

The charging apparatus 100 performs a matching of the user identification information and the consumption pattern information for each gender, age, and race of a plurality of users living and working in an area where the charging apparatus 100 is located, and extracts a set of services related to the consumption pattern information of users having the same or similar user identification information as that of the user who is provided with the user customized service. Thereafter, the charging apparatus 100 determines a correlation between the consumption pattern information of the users having the same user identification information as that of the user who is provided with the user customized service and the set of services related to the consumption pattern information, selects a service having the maximum correlation value as the user customized service for the user, and provides the selected service to the user.

Although the user customized service charging apparatus 100 shown in FIG. 3 is introduced as a Kiosk type, the present disclosure is not limited to this scheme, but can be manufactured in various forms including a large-sized screen depending on the purpose and the installation site.

The customer statistics unit 220 stores in a database, the consumption pattern information of a plurality of users living and working in an area where there is the charging apparatus 100, and provides the consumption pattern information stored in the database to the charging apparatus 100. The customer statistics unit 220 receives the consumption pattern information by gender, age, and race of a plurality of users living and working in an area where the charging apparatus 100 is located from credit card or point card service providers, stores the received consumption pattern information in a database. Then, in response to a request from the apparatus 100 for the consumption pattern information of a plurality of users, the customer statistics unit 220 provides the stored information to the charging apparatus 100.

The customer statistics unit 220 periodically updates the consumption pattern information of the plurality of users, and when there is no consumption a user stored in the database for a predetermined time, updates or deletes the consumption pattern information of the user.

When the user customized service is extracted by the charging apparatus 100, the service storage unit 230 receives information on the service, and provides the stored service to the charging apparatus 100. Although the user customized service is described as an advertisement in FIG. 3, the present disclosure is not limited to this scheme, but the user customized service may include a plurality of customized services for the users.

The service storage unit 230 is connected to an advertiser and an advertisement agency, and periodically receives information on a specific advertisement. When introducing a specific product to a user in a form of customized service through the charging apparatus 100, the advertiser produces an advertisement through the advertisement agency, and the advertisement agency provides the produced advertisement to the service storage unit 230. Thereafter, when the stored advertisement is determined to be the user customized service, the service storage unit 230 provides the stored advertisement to the charging apparatus 100.

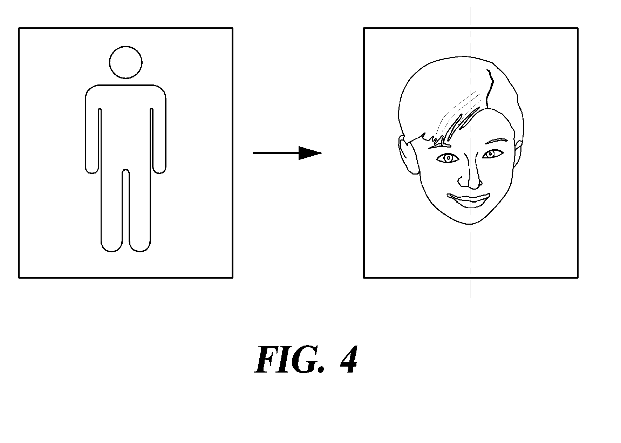

FIG. 4 is a diagram of a step of extracting specific data corresponding to a face area of a user from image data of the user according to some embodiments.

As shown in FIG. 4, when image data of a user within a recording range is received from the image capturer, a whole or a part of the user is included in the image data of the user. The data on the face area of the user is necessary to identify the user identification information, and the charging apparatus 100 for a user customized service classifies the image data of the user by pixel unit through the image processor 110, and extracts an area corresponding to the face area of the user from the divided pixels. Thereafter, the charging apparatus 100 further extracts information on eyes of the user from the data in the range corresponding to the face area of the user, and when both eyes of the user are not located at a horizontal position, adjusts positions of the eyes such that both eyes of the user are located at the horizontal position. Upon determining that the eyes of the user are located at the horizontal position, the device 100 for charging for a user customized service determines that the user customized service gets an attention from the user at a given time.

As shown in FIG. 4, the image data recorded by the image capturer is information including a front view of the user. The charging apparatus 100 extracts the face area from a body of the user by dividing the image data into each pixel, further extracts the positions of the eyes from the extracted face area, and performs a compensation such that the detected face faces the front.

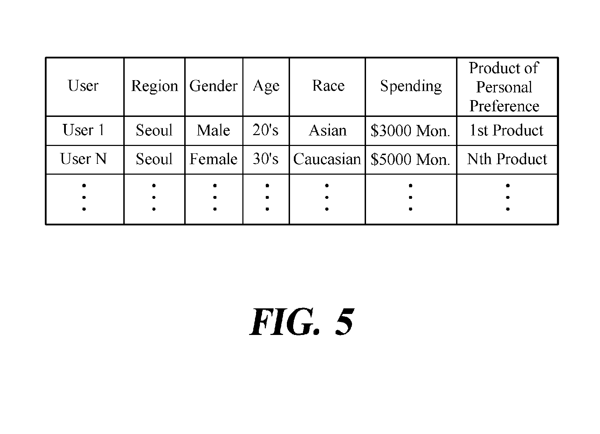

FIG. 5 is a diagram of user consumption patterns by gender, age, and race for a plurality of users stored in the customer statistics unit 220 according to some embodiments.

As shown in FIG. 5, the consumption pattern information for a plurality of users stored in the customer statistics unit 220 shows information for gender, age, and race of a plurality of users in the corresponding area (e.g., Seoul), and includes information on the amount of consumption and the product of personal preference for each user. For example, a user 1 is an Asian male in his 20's, spending 3000 USD/month, and prefers a first product as the product of personal preference. When it is identified that the identification information of a user to be provided with the user customized service through the charging apparatus 100 for a user customized service is an Asian male in his 20's, the information of the user 1 stored in the customer statistics unit 220 applies as an identification reference for extracting the user customized service for the user to be provided with the user customized service.

In the case of a user N, the user N is a Caucasian female in her 30's, spending 5000 USD/month, and prefers an Nth product as the product of personal preference. Similarly, when it is identified that the identification information of a user to be provided with the user customized service through the charging apparatus 100 for a user customized service is a Caucasian female in her 30's, the information on the user N stored in the customer statistics unit 220 applies as an identification reference for extracting the user customized service for the user to be provided with the user customized service.

In other words, the charging apparatus 100 is configured to receive the consumption pattern information by gender, age, and race of a plurality of users stored in the customer statistics unit 220, to acquire the consumption pattern information of a plurality of users matching the information of the user, and to provide the user customized service to the user based on the matching consumption pattern information.

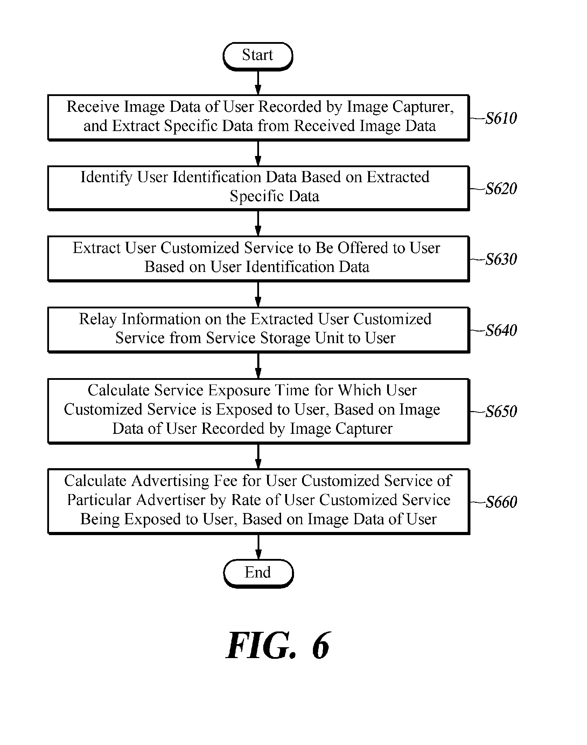

FIG. 6 is a flowchart of a procedural process for a method of charging for a user customized service according to some embodiments.

As shown in FIG. 6, a method of charging for a user customized service according to some embodiments includes a step of receiving image data of a user recorded by an image capturer and extracting specific data from the received image data (S610), a step of identifying user identification information of the user based on the extracted specific data (S620), a step of extracting a user customized service to be provided to the user based on the user identification information (S630), a step of receiving the extracted user customized service from the service storage unit and providing the user customized service to the user (S640), a step of calculating a service exposure time during which the user customized service is exposed to the user, based on the image data of the user recorded by the image capturer (S650), and a step of calculating an advertisement fee by an exposure ratio of the user customized service exposed to the user, based on the image data of the user (S660).

The step of extracting the specific data (S610), the step of identifying the user identification information (S620), the step of extracting the user customized service (S630), the step of providing the user customized service to the user (S640), the step of calculating the service exposure time (S650), and the step of calculating the advertisement fee (S660) respectively correspond to the image processor 110, the user type identifier 120, the service extractor 140, the service provider 150, the service time calculator 170, and the service charger 180, and a further description thereof is omitted.

Although exemplary embodiments of the present disclosure have been described for illustrative purposes, those skilled in the art will appreciate that various modifications, additions and substitutions are possible, without departing from the essential characteristics of the disclosure. Therefore, exemplary embodiments of the present disclosure have been described for the sake of brevity and clarity. Accordingly, one of ordinary skill would understand the scope of the disclosure is not limited by the explicitly described above embodiments but by the claims and equivalents thereof.

[Industrial Applicability]

As described above, the present disclosure is highly useful for an application in the fields of providing a user customized service by identifying user identification information based on image data of a user recorded by an image capturer and calculating an advertisement fee by an exposure ratio of the user customized service exposed to the user, based on the image data of the user.

CROSS-REFERENCE TO RELATED APPLICATION

If applicable, this application claims priority under 35 U.S.C §119(a) of Patent Application No. 10-2012-0096778, filed on August 31, 2012 in Korea, the entire content of which is incorporated herein by reference. In addition, this non-provisional application claims priority in countries, other than the U.S., with the same reason based on the Korean patent application, the entire content of which is hereby incorporated by reference.

**Claims**

1. An apparatus for charging for a user customized service, the apparatus comprising:

an image processor configured to receive image data of a user recorded by an image capturer and to extract specific data from the image data;
a user identifier configured to identify user identification data of the user based on the specific data;
a service extractor configured to extract the user customized service to be offered to the user, based on the user identification data of the user;
at least one service provider configured to receive information on the user customized service from a service storage unit and to provide the information to the user; and
a service charger configured to calculate a service fee for the user customized service of a particular service provider among the at least one service provider by an exposure ratio of the user customized service exposed to the user.

2. The apparatus of claim 1, further comprising a service time calculator configured to calculate a service exposure time during which the user customized service is exposed to the user, based on the image data of the user.

3. The apparatus of claim 2, wherein the exposure ratio is a ratio of the service exposure time to a total service time of the user customized service.

4. The apparatus of claim 3, wherein the service fee is proportional to a value of at least one weighting factor being set for each of the user identification data, multiplied by the exposure ratio.

5. The apparatus of claim 4, wherein the at least one weighting factor includes any one weight selected from the group consisting of a weight on a gender of the user, a weight on an age of the user, a weight on a race of the user, and any combinations thereof.

6. The apparatus of claim 1, wherein
the service fee includes a first service fee and a second service fee,
the first service fee is a fixed basic service fee, and
the second service fee is proportional to the exposure ratio.

7. The apparatus of claim 1, wherein
the service fee includes a first service fee and a second service fee,
the first service fee is a fixed basic service fee, and
the second service fee is proportional to an average of values of respective service weighting factors, each calculated for each user customized service of the particular service provider, multiplied by the exposure ratio.

8. A method of charging for a user customized service, the method comprising:

   receiving captured image data of a user recorded by an image capturer and extracting specific data from the captured image data;
   identifying user identification data of the user based on the specific data;
   extracting the user customized service to be offered to the user, based on the user identification data of the user;
   receive information on the user customized service from a service storage unit and providing the information to the user;
   calculating a service exposure time during which the user customized service is exposed to the user, based on the image data of the user; and
   calculating a service fee for the user customized service of a particular service provider by an exposure ratio of the user customized service exposed to the user, based on the image data of the user.

9. The method of claim 8, wherein
the exposure ratio is a ratio of the exposure time to a total service time of the user customized service, and
the service fee is proportional to a value of at least one weighting factor being set for each of the user identification data, multiplied by the exposure ratio.

10. The method of claim 9, wherein the at least one weighting factor includes any one weight selected from the group consisting of a weight on a gender of the user, a weight on an age of the user, a weight on a race of the user, and any combinations thereof.

100

Image Processor —110

User Type Identifier —120

Consumption Pattern Receiver —130

Service Extractor —140

Service Provider —150

Display Unit —160

Service Time Calculator —170

Service Charger —180

# FIG. 1

| Advertisement | Target Gender | Target Age | . . . . |
|:---:|:---:|:---:|:---:|
| $C_1$ | $G_1$ | $A_1$ | . . . . |
| $C_2$ | $G_2$ | $A_2$ | . . . . |
| $\vdots$ | $\vdots$ | $\vdots$ | |
| $C_N$ | $G_N$ | $A_N$ | . . . . |

# FIG. 2

**200**

**210**
**100**
**220**

Customer
Statistics
Unit

User
Customized
Ad

**230**

Service
Storage
Unit

Ad Agency

1st Product Ad
⋮
Nth Product Ad

Advertiser

1st Product
⋮
Nth Product

# *FIG. 3*

**FIG. 4**

| User | Region | Gender | Age | Race | Spending | Product of Personal Preference |
|------|--------|--------|-----|------|----------|-------------------------------|
| User 1 | Seoul | Male | 20's | Asian | $3000 Mon. | 1st Product |
| User N | Seoul | Female | 30's | Caucasian | $5000 Mon. | Nth Product |
| ⋮ | ⋮ | ⋮ | ⋮ | ⋮ | ⋮ | ⋮ |

# FIG. 5

Start

Receive Image Data of User Recorded by Image Capturer, and Extract Specific Data from Received Image Data ── S610

Identify User Identification Data Based on Extracted Specific Data ── S620

Extract User Customized Service to Be Offered to User Based on User Identification Data ── S630

Relay Information on the Extracted User Customized Service from Service Storage Unit to User ── S640

Calculate Service Exposure Time for Which User Customized Service is Exposed to User, Based on Image Data of User Recorded by Image Capturer ── S650

Calculate Advertising Fee for User Customized Service of Particular Advertiser by Rate of User Customized Service Being Exposed to User, Based on Image Data of User ── S660

End

# FIG. 6

## INTERNATIONAL SEARCH REPORT

International application No.

**PCT/KR2013/007771**

| A. CLASSIFICATION OF SUBJECT MATTER |
|---|
| ***G06Q 30/02(2012.01)i, G06F 17/00(2006.01)i*** |
| According to International Patent Classification (IPC) or to both national classification and IPC |

| B. FIELDS SEARCHED |
|---|
| Minimum documentation searched (classification system followed by classification symbols)<br>G06Q 30/02; G06F 15/00; H04N 7/173; G06F 3/14; H04M 1/247; G06F 17/00 |
| Documentation searched other than minimum documentation to the extent that such documents are included in the fields searched<br>Korean Utility models and applications for Utility models: IPC as above<br>Japanese Utility models and applications for Utility models: IPC as above |
| Electronic data base consulted during the international search (name of data base and, where practicable, search terms used)<br>eKOMPASS (KIPO internal) & Keywords: imaging, recognition, service, billing |

| C. DOCUMENTS CONSIDERED TO BE RELEVANT | | |
|---|---|---|
| Category* | Citation of document, with indication, where appropriate, of the relevant passages | Relevant to claim No. |
| Y | KR 10-2011-0070666 A (ELECTRONICS AND TELECOMMUNICATIONS RESEARCH INSTITUTE) 24 June 2011<br>See abstract, paragraphs [0028], [0036]-[0059] and [0061], claim 1 and figure 1. | 1-10 |
| Y | KR 10-2003-0095571 A (KOREA M.P.S CO., LTD.) 24 December 2003<br>See abstract, page 4, claim 6 and figure 3. | 1-10 |
| Y | KR 10-2009-0046006 A (BIZMODELINE CO., LTD.) 11 May 2009<br>See abstract, claim 1 and figure 6. | 3-7,9-10 |
| A | KR 10-2012-0042314 A (KT CORPORATION) 03 May 2012<br>See abstract, claim 1 and figures 4, 5. | 1-10 |
| A | JP 2010-182002 A (SONY ERICSSON MOBILE COMMUNICATIONS AB) 19 August 2010<br>See abstract, paragraph [0020], claim 1 and figure 3. | 1-10 |

| ☐ Further documents are listed in the continuation of Box C. | ☒ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 17 DECEMBER 2013 (17.12.2013) | **19 DECEMBER 2013 (19.12.2013)** |
| Name and mailing address of the ISA/KR<br>Korean Intellectual Property Office<br>Government Complex-Daejeon, 189 Seonsa-ro, Daejeon 302-701, Republic of Korea<br>Facsimile No. 82-42-472-7140 | Authorized officer<br><br>Telephone No. |

Form PCT/ISA/210 (second sheet) (July 2009)

INTERNATIONAL SEARCH REPORT
Information on patent family members

International application No.

**PCT/KR2013/007771**

| Patent document cited in search report | Publication date | Patent family member | Publication date |
|---|---|---|---|
| KR 10-2011-0070666 A | 24/06/2011 | US 2011-0150283 A1 | 23/06/2011 |
| KR 10-2003-0095571 A | 24/12/2003 | NONE | |
| KR 10-2009-0046006 A | 11/05/2009 | NONE | |
| KR 10-2012-0042314 A | 03/05/2012 | NONE | |
| JP 2010-182002 A | 19/08/2010 | NONE | |

Form PCT/ISA/210 (patent family annex) (July 2009)

**EP 2 892 016 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020120096778